# FASCICULE DE BREVET EUROPEEN

(11) **EP 2 912 755 B1**
(45) Date de publication et mention de la délivrance du brevet: **03.08.2022**
(21) Numéro de dépôt: 13789597.5
(22) Date de dépôt: 17.09.2013
(51) Int. Cl.: H02K 1/28, H02K 1/14, H02K 1/18, H02K 7/18

(54) **GENERATEUR ELECTRIQUE A MULTIPLES MACHINES ELECTRIQUES**
ELEKTRISCHER GENERATOR MIT MEHREREN ELEKTRISCHEN MASCHINEN
ELECTRICAL GENERATOR HAVING MULTIPLE ELECTRICAL MACHINES

(30) Priorité: 01.10.2012 FR 1259253
(43) Date de publication de la demande: 02.09.2015
(73) Titulaire: DDIS, 59121 Prouvy (FR)
(72) Inventeur: CANINI, Jean Marc, 59149 Aibes (FR)
(74) Mandataire: Cabinet Beau de Loménie
(86) Numéro de dépôt international: PCT/FR2013/052120
(87) Numéro de publication internationale: WO 2014/053723

(56) Documents cités:
- EP-A2- 0 627 805
- WO-A1-99/48187
- FR-A1- 2 926 935
- EDUARD MULJADI ET AL: "Axial-Flux Modular Permanent-Magnet Generator with a Toroidal Winding for Wind-Turbine Applications", IEEE TRANSACTIONS ON INDUSTRY APPLICATIONS, IEEE SERVICE CENTER, PISCATAWAY, NJ, US, vol. 35, no. 4, 1 août 1999 (1999-08-01), XP011022612, ISSN: 0093-9994

## Description

La présente invention a pour objet un générateur électrique permettant la conversion d'une énergie mécanique en énergie électrique.

Dans son application principale, le générateur électrique sera utilisé pour la conversion de l'énergie mécanique d'une éolienne. Toutefois, le générateur électrique pourra également être utilisé dans de nombreux autres domaines, tels que celui des centrales électriques, groupé à une turbine à vapeur ou à une turbine à gaz, ou encore celui des centrales hydrauliques.

Dans le reste de la demande, il sera détaillé les avantages du générateur électrique comprenant au moins une machine électrique, la machine électrique étant un alternateur à flux axial pouvant être intégré à une éolienne.

A partir de cet exemple, l'homme du métier en déduira aisément les adaptations nécessaires pour réaliser le générateur électrique dans d'autres applications telles que celles précitées.

Depuis plusieurs années, les dimensions des éoliennes, et en particulier le diamètre de leurs hélices, ont considérablement augmenté, de manière à obtenir des puissances électriques très importantes, sans multiplier le nombre d'éoliennes. Par suite, les machines électriques équipant de telles éoliennes sont également de plus en plus volumineuses.

Ces modifications des dimensions des machines électriques nécessitent d'adapter les outils de production, compliquent l'installation et la maintenance, augmentent les coûts de fabrication et d'installation et accentuent l'impact visuel de tels dispositifs.

Une solution est proposée par le document FR 2 926 935 détenu par la demanderesse, qui décrit une machine électrique comportant un rotor entourant un stator, le rotor et le stator étant tous deux constitués de différents secteurs solidarisés les uns aux autres. Ainsi, la structure du rotor et du stator permet de réaliser des machines électriques de tailles variables, à partir d'un seul outil de production, et dont l'installation est plus aisée que celle de machines électriques de mêmes dimensions comprenant un rotor et un stator, chacun d'une seule pièce.

Cette solution ne résout cependant pas l'ensemble des problèmes précédemment évoqués, parmi lesquels celui de l'impact visuel d'éoliennes de grandes dimensions.

Un autre exemple d'art antérieur est le document WO 99/48187.

### Objet et résumé de l'invention

La présente invention a pour but de proposer un générateur électrique permettant d'obtenir des puissances électriques très importantes, sans augmenter significativement les dimensions du générateur électrique. Ce but est atteint par le fait que l'invention porte sur un générateur électrique tel que défini à la revendication 1.

Le générateur électrique permet la conversion d'une énergie mécanique en énergie électrique, le générateur électrique comporte au moins :
- une première machine électrique à flux axial, comportant un premier rotor monté rotatif autour d'un premier axe et entourant un premier stator pour générer un premier flux magnétique ;
- une deuxième machine électrique à flux axial, comportant un deuxième rotor distinct du premier rotor, qui est coaxial au premier rotor et qui entoure un deuxième stator pour générer un deuxième flux magnétique ;
- des premiers moyens de solidarisation azimutale pour solidariser les premier et deuxième rotors de sorte que les premier et deuxième rotors peuvent être simultanément mis en rotation autour du premier axe pour générer simultanément les premier et deuxième flux magnétiques.

Ainsi, ce dispositif permet de cumuler les puissances électriques générées par les première et deuxième machines électriques, pour obtenir une énergie électrique plus importante que celle obtenue par un générateur électrique ne comportant que l'une des première et deuxième machines électriques.

Par azimutal, on entend la direction perpendiculaire à la fois à la direction axiale des premier et deuxième rotors, définie par le premier axe autour duquel les premier et deuxième rotors sont montés rotatifs, et à la direction radiale des premier et deuxième rotor, définie par l'un des rayons de l'un des premier et deuxième rotors. La solidarisation azimutale a pour effet que les premier et deuxième rotors ne peuvent pas tourner l'un par rapport à l'autre autour de leurs directions axiales. Dit autrement, une solidarisation azimutale entre deux rotors empêche un déplacement azimutal relatif entre ces deux rotors. Par suite, la rotation de l'un des rotors entraîne la rotation de l'autre.

Les premier et deuxième rotors étant solidarisés l'un à l'autre, ils sont mis en rotation simultanément, par exemple et de manière non limitative, par le moyeu d'une éolienne.

En outre, la complexité de la fabrication du générateur électrique selon la présente invention est similaire à celle de la fabrication de chacune des première et deuxième machines électriques ; son coût de fabrication est égal, voire légèrement supérieur, aux coûts de fabrication des première et deuxième machines électriques.

Son installation ainsi que sa maintenance sont significativement simplifiées par rapport à un générateur électrique générant une puissance électrique similaire qui comporterait une unique machine électrique, les dimensions de cette unique machine électrique étant sensiblement supérieures à celles de chacune des première et deuxième machines électriques composant le générateur selon la présente invention.

En cas de dysfonctionnement de l'une ou l'autre des machines électriques, le générateur électrique selon la présente invention peut continuer à générer de l'énergie électrique, le générateur électrique étant ainsi maintenu disponible. Cette caractéristique est particulièrement avantageuse lorsque le générateur électrique équipe une éolienne installée dans des zones dont l'accès est difficile, telles que par exemple en pleine mer, les délais d'intervention pour réparer l'élément défectueux pouvant alors être particulièrement longs.

L'encombrement radial du générateur électrique de la présente invention est celui de la machine électrique dont les dimensions sont les plus importantes.

Par encombrement radial du générateur, on entend l'envergure définie par les première et deuxième machines électriques dans un plan perpendiculaire au premier axe.

Selon l'invention, les premier et deuxième rotors enveloppent respectivement les premier et deuxième stators de manière circonférentielle.

En d'autres termes, les premier et deuxième rotors s'étendent selon la circonférence respective des premier et deuxième stators, de manière les entourer.

On comprend donc que les premier et deuxième rotors définissent chacun une cavité annulaire, ou logement, configurée pour recevoir respectivement les premier et deuxième stators.

Les logements annulaires ainsi définis par les premier et deuxième rotors sont reliés l'un à l'autre par les premiers moyens de solidarisation azimutale.

De préférence, les première et deuxième machines électriques sont identiques, de sorte que la complexité de la fabrication du générateur électrique s'en trouve encore réduite. L'encombrement radial du générateur électrique est alors celui d'un générateur électrique ne comportant qu'une machine électrique.

De manière avantageuse, les première et deuxième machines électriques peuvent mettre en œuvre des technologies différentes, de manière à réduire la probabilité que les machines électriques soient défectueuses de manière simultanée.

L'invention est déclinée ci-après dans une série de variantes de réalisation, qui peuvent être considérées seules ou en combinaison avec une ou plusieurs des précédentes.

Selon l'invention, le premier et le deuxième rotors comportent chacun une première et une deuxième parois, disposées de part et d'autre respectivement des premier et deuxième stators, qui définissent respectivement un premier et un second logement annulaire dans lequel sont logés les premier et deuxième stators, la deuxième paroi du premier rotor et la première paroi du deuxième rotor étant disposées en regard l'une de l'autre et les premiers moyens de solidarisation azimutale étant configurés pour coupler solidairement selon une direction azimutale la deuxième paroi du premier rotor et la première paroi du deuxième rotor. On réalise donc un couplage azimutal entre les premier et deuxième rotors.

On comprend que dans les machines électriques du générateur électrique selon la présente invention, chaque stator est disposé entre les première et deuxième parois du rotor correspondant, les première et deuxième parois de chacun des rotors définissant un logement circonférentiel. On comprend également que les première et deuxième machines électriques sont disposées côte à côte, et qu'elles sont solidarisées l'une à l'autre par coopération de leurs parois adjacentes. Ainsi, on comprend que dans un plan contenant le premier axe, le générateur électrique présente un axe de symétrie disposé entre la deuxième paroi de la première machine et la première paroi de la deuxième machine.

Par cette disposition, il suffit que l'une des machines électriques soit entraînée en rotation autour du premier axe pour qu'elle entraîne avec elle l'autre machine électrique en rotation autour du premier axe.

En outre, par cette disposition, on comprend que la structure des stators ne doit pas être modifiée pour qu'ils soient montés sur le générateur électrique de la présente invention, n'engendrant ainsi pas de coûts supplémentaires pour leur fabrication et leur assemblage. Par ailleurs, on comprend que les premiers moyens de solidarisation sont montés sur la face externe des parois adjacentes des premier et deuxième rotors, de sorte que la structure interne des rotors, ainsi que le fonctionnement des machines électriques, ne sont pas modifiés par la solidarisation des première et deuxième machines électriques.

Par face externe des parois, on comprend la face des parois des rotors opposée à la face disposée en regard du premier et du deuxième stator avec lesquels les premier et deuxième rotors coopèrent respectivement.

De préférence, les première et deuxième parois des premier et deuxième rotors présentent une forme annulaire.

De manière avantageuse, les première et deuxième parois des premier et deuxième rotors présentent la forme de disques coaxiaux.

De préférence, les premier et deuxième stators sont également des disques coaxiaux.

Avantageusement, les premier et deuxième stators sont coaxiaux aux premier et deuxième rotors.

Selon l'invention, les premiers moyens de solidarisation azimutale constituent également des moyens de solidarisation axiale configurés pour coupler solidairement selon le premier axe les premier et deuxième rotors. En d'autres termes, ils empêchent tout déplacement axial entre les premier et deuxième rotors. Le seul degré de liberté est un déplacement radial qui n'est autorisé que lors des opérations de montage et de démontage du générateur électrique selon la présente invention.

Selon l'invention, les premiers moyens de solidarisation azimutale comportent une liaison glissière permettant un déplacement radial de la deuxième paroi du premier rotor par rapport à la première paroi du deuxième rotor lors de l'assemblage du générateur électrique.

Par cette disposition, on comprend que les premier et deuxième rotors sont fixés ensemble par une translation radiale selon un axe perpendiculaire au premier axe, de telle sorte que l'espace axial nécessaire à l'assemblage du générateur électrique est égal à l'espace axial occupé par le générateur électrique une fois monté.

Par espace axial, on comprend la portion du premier axe le long de laquelle les première et deuxième machines électriques sont disposées dans le générateur électrique selon la présente invention.

On comprend donc que les premiers moyens de solidarisation azimutale sont déplacés radialement par rapport aux premier et deuxième rotors afin d'assembler le générateur électrique selon la présente invention. L'utilisation d'une liaison glissière maintient ainsi constant l'écartement entre les premier et deuxième rotors.

De préférence, la liaison glissière comprend une glissière extérieure formée sur l'une des parois prises parmi la deuxième paroi du premier rotor et la première paroi du deuxième rotor, et une glissière intérieure formée sur l'autre des parois prises parmi la deuxième paroi du premier rotor et la première paroi du deuxième rotor, les glissières intérieure et extérieure étant configurées pour que la glissière intérieure coulisse dans la glissière extérieure lors de l'assemblage du générateur électrique.

On comprend donc que la deuxième paroi du premier rotor et la première paroi du deuxième rotor comportent des glissières extérieure et intérieure formées sur leur face externe, de manière à ce que les deux parois puissent être solidarisées l'une à l'autre. Par cette disposition, la fabrication des rotors est identique à celle d'un rotor destiné à équiper un générateur électrique ne comportant qu'une machine électrique, les glissières intérieure et extérieure devant simplement être ajoutées et solidarisées sur les faces externes des rotors.

Avantageusement, la liaison glissière présente un profil en forme de queue d'aronde.

Par queue d'aronde, on entend une liaison glissière qui comprend un tenon en forme de trapèze pénétrant dans une rainure de même forme, pour assurer la liaison glissière.

Le coulissement des glissières l'une dans l'autre permet également de simplifier le montage du générateur électrique selon la présente invention, une fois la glissière intérieure engagée dans la glissière extérieure, l'utilisateur n'ayant qu'à translater les glissières l'une par rapport à l'autre.

De manière avantageuse, l'un des premier et deuxième rotors est composé d'au moins deux secteurs et de moyens d'assemblage permettant de fixer les deux secteurs l'un à l'autre, les premiers moyens de solidarisation azimutale étant agencés sur au moins l'un des secteurs.

Par cette disposition, il est possible de fabriquer et de déplacer séparément les différents secteurs du rotor, l'assemblage des secteurs entre eux pouvant être réalisé sur le site de montage du générateur électrique selon la présente invention.

En outre, l'utilisation de secteurs constituant le rotor permet également de réaliser des machines électriques de tailles variables, et notamment de dimensions importantes, à partir d'un seul outil de production.

De préférence, les deux rotors sont composés d'au moins deux secteurs.

Avantageusement, les deux rotors comportent le même nombre de secteurs.

De manière avantageuse, chaque secteur du premier rotor peut être solidarisé par des moyens de solidarisation azimutale à l'un des secteurs du second rotor.

De préférence, le générateur électrique comporte en outre des moyens d'attachement pour solidariser les premier et deuxième stators entre eux.

Par cette configuration, l'écartement entre les stators est maintenu constant.

Avantageusement, le générateur électrique comporte en outre une troisième machine électrique à flux axial comportant un troisième rotor coaxial au premier rotor et entourant un troisième stator pour générer un troisième flux magnétique, et des deuxièmes moyens de solidarisation azimutale pour solidariser le troisième rotor à l'un des premier et deuxième rotors de sorte que les premier, deuxième et troisième rotors peuvent être simultanément mis en rotation autour du premier axe pour générer simultanément les premier, deuxième et troisième flux magnétiques.

Le troisième rotor définit donc un troisième logement annulaire configuré pour recevoir le troisième stator, le troisième logement annulaire étant relié à l'un des premier et deuxième logements annulaires par les deuxièmes moyens de solidarisation azimutale.

On comprend que l'ensemble des avantages précédemment détaillés pour un générateur électrique comprenant une première et une deuxième machines électriques reste vrai dans le cas où le générateur électrique comporte trois machines électriques. L'homme du métier pourra aisément déduire de la structure des générateurs électriques, décrits dans la présente demande, la structure d'un générateur électrique comportant quatre, cinq, ou davantage de machines électriques. On peut donc disposer aisément d'un générateur électrique de la puissance souhaitée, en associant un nombre adéquat de machines électriques.

L'invention porte également sur une éolienne comportant un mât et un moyeu monté rotatif par rapport au mât autour d'un axe de rotation, le moyeu étant entraîné en rotation par une hélice, l'éolienne comportant également un générateur électrique selon la présente invention, les premier et deuxième rotors étant montés rotatifs autour de l'axe de rotation.

De manière avantageuse, au moins l'un des premier et deuxième rotors comporte des moyens de fixation configurés pour fixer ledit au moins un des premier et deuxième rotors au moyeu.

Par cette configuration, on comprend que l'hélice entraîne, par l'intermédiaire des moyens de fixation, la rotation des premier et deuxième rotors. Ainsi, la puissance électrique produite par l'éolienne selon la présente invention, obtenue par la combinaison des première et deuxième machines électriques, est sensiblement supérieure à celle que produirait une éolienne de mêmes dimensions dont le générateur électrique ne comporterait que l'une des première et deuxième machines électriques.

De préférence, l'éolienne comporte un flasque liant le moyeu à au moins l'une des machines électriques, des perforations étant agencées dans le flasque pour permettre la ventilation des machines électriques.

De manière avantageuse, l'éolienne comporte un système de ventilation comprenant au moins un module de ventilation constitué d'un ventilateur et d'un moteur.

De préférence, le système de ventilation comprend au moins autant de modules de ventilation que de machines électriques.

Par cette configuration, on comprend que chacun des modules de ventilation est destiné à ventiler de manière distincte l'une des machines électriques. Ainsi, la configuration du système de ventilation permet de mettre en fonctionnement de manière sélective certains modules de ventilation pour ventiler au moins l'une des machines électriques.

Avantageusement, chaque machine électrique comporte un convertisseur de puissance configuré pour transférer la puissance électrique générée par la machine électrique sur le réseau électrique permettant d'acheminer l'énergie électrique vers les consommateurs.

De manière avantageuse, l'éolienne selon la présente invention comporte un système de sélection configuré pour mettre en fonctionnement de manière indépendante chacun des convertisseurs de puissance du générateur électrique.

On comprend donc qu'il est possible d'optimiser le rendement du générateur électrique, par exemple par vent faible, en ne mettant en fonctionnement que certains convertisseurs de puissance. Le système de sélection permet également de répartir le temps de production d'énergie électrique sur les différentes machines électriques, de manière à gérer leur usure.

Plus généralement, on comprend que le générateur électrique selon la présente invention comporte de nombreux facteurs de modularité : plusieurs machines électriques peuvent être combinées les unes aux autres au sein d'un même générateur électrique, les différentes machines électriques peuvent présenter des dimensions, des puissances, des propriétés identiques ou différentes, ou mettre en œuvre des technologies identiques ou différentes, les rotors peuvent être composés de plusieurs secteurs, les stators peuvent également être constitués d'une jante pouvant se décomposer en plusieurs éléments distincts destinés à être assemblés, le système de ventilation comporte plusieurs modules de ventilation, chaque machine électrique est associée à un convertisseur de puissance distinct, ...

On comprend donc qu'à partir de composants élémentaires, tels que les secteurs de rotors, les éléments de stators, les modules de ventilation, les convertisseurs de puissance, ..., il est possible de composer une éolienne répondant à tout type d'exigences de puissance et de dimensions. Tel que détaillé précédemment à la description du générateur électrique comportant une première et une seconde machines électriques, une telle modularité présente des avantages multiples quant au coût et à la complexité de la fabrication, à l'acheminement des composants de l'éolienne vers le site de montage, aux dimensions de l'éolienne montée, à sa maintenance, à sa capacité à générer de manière continue de l'énergie électrique, en dépit de conditions externes défavorables ou d'éléments défectueux, ...

Selon un autre aspect non-couvert par l'invention, il est également proposé un procédé de montage d'une éolienne selon la présente invention, l'éolienne comportant une première et une seconde machines électriques, le procédé comprenant une étape au cours de laquelle la première machine électrique est montée sur l'éolienne, suivie d'une étape au cours de laquelle le deuxième stator est monté sur l'éolienne, suivie d'une étape au cours de laquelle le deuxième rotor est monté autour du deuxième stator et est solidarisé au premier rotor.

Avantageusement, on peut ainsi remplacer l'un des éléments constituant l'une des première et deuxième machines électriques, sans démonter l'ensemble constitué des première et deuxième machines électriques.

De manière avantageuse, les première et deuxième machines électriques peuvent être montées l'une à l'autre selon le procédé préalablement au montage sur l'éolienne de l'ensemble constitué des première et deuxième machines électriques, pour permettre, par exemple, d'en tester le fonctionnement.

Enfin, selon un autre aspect non-couvert par l'invention, il est proposé un procédé de montage d'une éolienne selon la présente invention, l'éolienne comportant une première, une seconde et une troisième machines électriques, le procédé comprenant une étape au cours de laquelle la première machine électrique est montée sur l'éolienne, suivie d'une étape au cours de laquelle le deuxième stator est monté sur l'éolienne, suivie d'une étape au cours de laquelle la troisième machine électrique est montée sur l'éolienne, suivie d'une étape au cours de laquelle le deuxième rotor est monté autour du deuxième stator et est solidarisé aux premier et troisième rotors.

Avantageusement, les première, deuxième et troisième machines électriques peuvent être montées ensemble selon le procédé et préalablement au montage sur l'éolienne de l'ensemble constitué des trois machines électriques.

### Brève description des dessins

D'autres caractéristiques et avantages de l'invention apparaîtront plus clairement et de manière complète à la lecture de la description ci-après d'un mode de réalisation préféré, donné à titre d'exemple non limitatif et en référence aux dessins annexés suivants sur lesquels :
- la figure **1** représente schématiquement un exemple de générateur électrique selon la présente invention, le générateur électrique comportant une première et une deuxième machines électriques ;
- la figure **2** représente schématiquement les première et deuxième machines électriques du générateur électrique de la figure **1****,** vues de dessus ;
- les figures **3** et **4** représentent schématiquement une partie des première et deuxième machines électriques du générateur électrique de la figure **1** ;
- la figure **5** représente schématiquement une étape du montage du générateur électrique de la figure **1** ;
- la figure **6** représente schématiquement une éolienne comportant le générateur électrique de la figure **1** ; et
- la figure **7** représente schématiquement un exemple de générateur électrique selon la présente invention, le générateur électrique comportant une première, une deuxième et une troisième machines électriques.

### Description détaillée de l'invention

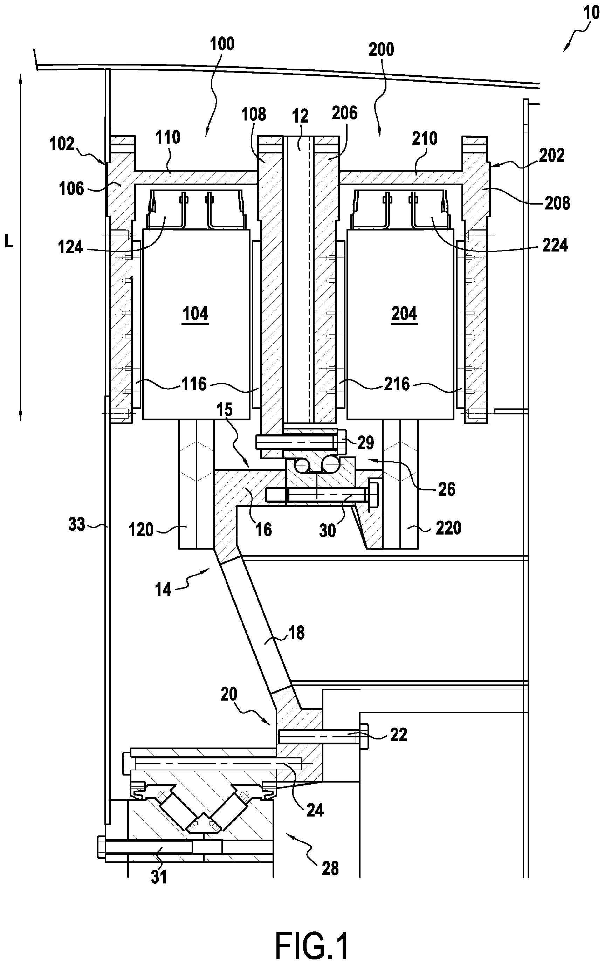

Dans l'exemple représenté à la figure **1****,** le générateur électrique **10** selon l'invention présente une première machine électrique **100** à flux axial constituée d'un premier rotor **102** monté rotatif autour d'un premier axe **X** et entourant un premier stator **104.** Le générateur électrique **10** présente également une deuxième machine électrique **200** à flux axial constituée d'un deuxième rotor **202** également monté rotatif autour du premier axe **X** et entourant un deuxième stator **204.**

Tel que représenté sur la figure **1****,** le premier rotor **102** présente, de manière non limitative, un profil en forme de U ; le premier rotor **102** comporte en particulier une première **106** et une deuxième **108** parois disposées de part et d'autre du premier stator **104.** Le premier rotor **102** comporte en outre une première bordure supérieure **110** qui lie les première **106** et deuxième **108** parois.

Les première **106** et deuxième **108** parois du premier rotor **102** présentent chacune une forme annulaire et définissent un premier logement annulaire configuré pour recevoir le premier stator **104.**

On comprend donc que le premier rotor **102** enveloppe le premier stator **104** de manière circonférentielle. En d'autres termes, le premier rotor **102** s'étend selon la circonférence du premier stator **104** de manière à l'entourer.

De manière similaire, le deuxième rotor **202** présente, de manière non limitative, un profil en forme de U ; le deuxième rotor **202** comporte en particulier une première **206** et une deuxième **208** parois disposées de part et d'autre du deuxième stator **204,** et liées par une deuxième bordure supérieure **210.**

Ainsi, de manière similaire à la première machine électrique **100,** les première **206** et deuxième **208** parois du deuxième rotor **202** présentent chacune une forme annulaire, et définissent un deuxième logement annulaire configuré pour recevoir le deuxième stator **204.**

En d'autres termes, le deuxième rotor **202** enveloppe le deuxième stator **204** de manière circonférentielle.

Sans sortir du cadre de la présente invention, les première, deuxième parois **106, 108, 206, 208** et les bordures supérieures **110, 210** de chacun des premier et deuxième rotors **102, 202** pourraient constituer une pièce unique dont le profil serait tel qu'elle entourerait respectivement le premier **104** et le deuxième **204** stators.

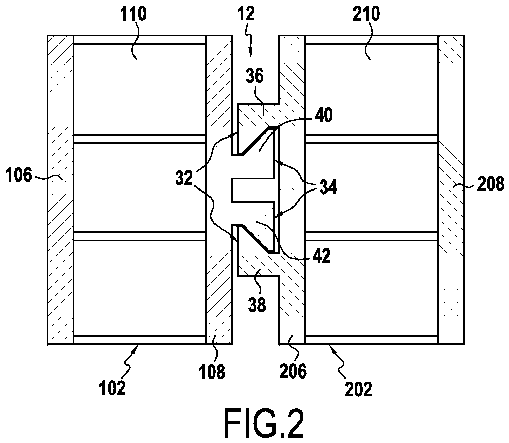

Le générateur électrique **10** selon la présente invention comporte également des premiers moyens de solidarisation **12** disposés entre la deuxième paroi **108** de la première machine électrique **100** et la première paroi **206** de la deuxième machine électrique **200,** qui seront décrits de manière détaillée en particulier à l'observation de la figure **2****.**

On comprend que les premiers moyens de solidarisation **12** sont configurés de manière à relier les premier et deuxième logements circonférentiels définis respectivement par les premier **102** et deuxième **202** rotors.

Le générateur électrique **10** comporte en outre des premiers moyens de liaison **14** disposés entre les première **100** et deuxième **200** machines électriques. Tel que représenté sur la figure **1****,** l'extrémité supérieure **15** des premiers moyens de liaison **14** est disposée entre les premier **104** et deuxième **204** stators et comporte des moyens d'attachement **16** configurés pour solidariser les premier **104** et deuxième **204** stators.

La portion médiane des premiers moyens de liaison **14** comporte une perforation **18** et leur extrémité inférieure **20** comporte des premiers **22** et seconds **24** éléments de fixation.

Tel que représenté sur la figure **1****,** le générateur électrique **10** comporte également un premier **26** et un second **28** roulements. La partie supérieure du premier roulement **26** est solidarisée à la seconde paroi **108** du premier rotor **102** de la première machine électrique **100** par l'intermédiaire de premiers moyens de solidarisation **29** ; la partie inférieure du premier roulement **26** est, pour sa part, solidarisée à l'extrémité supérieure **15** des premiers moyens de liaison **14** par l'intermédiaire de deuxièmes moyens de solidarisation **30.**

La partie supérieure du second roulement **28** est solidarisée à l'extrémité inférieure **20** des premiers moyens de liaison **14** par l'intermédiaire des seconds éléments de fixation **24 ;** la partie inférieure du second roulement **28** comporte des moyens de couplage **31.**

Tel que représenté sur les différentes figures, les premiers et deuxièmes **29, 30** moyens de solidarisation, les premiers et seconds **22, 24** éléments de fixation et les moyens de couplage **31** peuvent être constitués de boulons ; ils peuvent également être constitués de tout autre moyen permettant de solidariser ensemble plusieurs éléments, sans que l'on sorte du cadre de la présente invention.

Le générateur électrique **10** comporte enfin des moyens de fixation **33** montés à la fois sur la première paroi **106** du premier rotor **102** de la première machine électrique **100** et sur le second roulement **28** au moyen des moyens de couplage **31.**

La figure **2** représente de manière détaillée les premiers moyens de solidarisation azimutale **12.**

Sur cette figure sur laquelle les premier **102** et deuxième **202** rotors sont représentés vus de dessus, il apparaît que les premiers moyens de solidarisation azimutale **12** sont constitués d'une glissière extérieure **32** et d'une glissière intérieure **34.**

La glissière extérieure **32** est constituée d'une première **36** et d'une seconde **38** portions latérales toutes deux formées sur la première paroi **206** du deuxième rotor **202.** L'espace formé entre les première **36** et seconde **38** portions latérales définit un logement dont le profil présente une forme de trapèze.

La glissière intérieure **34** est constituée d'un premier **40** et d'un second **42** côtés, tous deux formés sur la deuxième paroi **108** du premier rotor **102** et qui définissent une section en forme de trapèze configurée pour être contenue dans le logement défini par la glissière extérieure **32.** La glissière intérieure **34** pourrait également être constituée d'une seule pièce définissant une section en forme de trapèze sans que l'on sorte du cadre de la présente invention. On comprend donc que la forme des glissières intérieure **34** et extérieure **32** est telle que la glissière intérieure **34** peut coulisser dans la glissière extérieure **32** selon une direction longitudinale **L,** la direction longitudinale **L** étant définie par les portions latérales **36, 38** et les côtés **40, 42** parallèles les uns aux autres.

Tel que cela apparaît sur la figure **2****,** les portions latérales **36, 38** et les côtés **40, 42** font saillie depuis respectivement la première paroi **206** du deuxième rotor **202** et la deuxième paroi **108** du premier rotor **102** ; par exemple et de manière non limitative, les portions latérales **36, 38** et les côtés **40, 42** sont fixés par vissage ou par tout autre dispositif de fixation sur la première paroi **206** du deuxième rotor **202** et sur la deuxième paroi **108** du premier rotor **102.**

Il apparaît donc que les premiers moyens de solidarisation azimutale **12** présentent un profil en forme de queue d'aronde.

On pourrait également concevoir, et sans sortir du cadre de la présente invention, des premiers moyens de solidarisation azimutale **12** présentant un profil de forme différente, ou un générateur électrique **10** dont la glissière intérieure **34** et la glissière extérieure **32** seraient respectivement formées sur la première paroi **206** du deuxième rotor **202** et sur la deuxième paroi **108** du premier rotor **102.**

On comprend donc que les premiers moyens de solidarisation azimutale **12** comportent une liaison glissière selon la direction longitudinale **L,** qui constitue une direction radiale des premier **102** et deuxième **202** rotors, la liaison glissière étant formée par les glissières intérieure **34** et extérieure **32** configurées pour coulisser l'une dans l'autre lors du montage du générateur électrique **10** selon la présente invention, de manière à solidariser les premier **102** et deuxième **202** rotors.

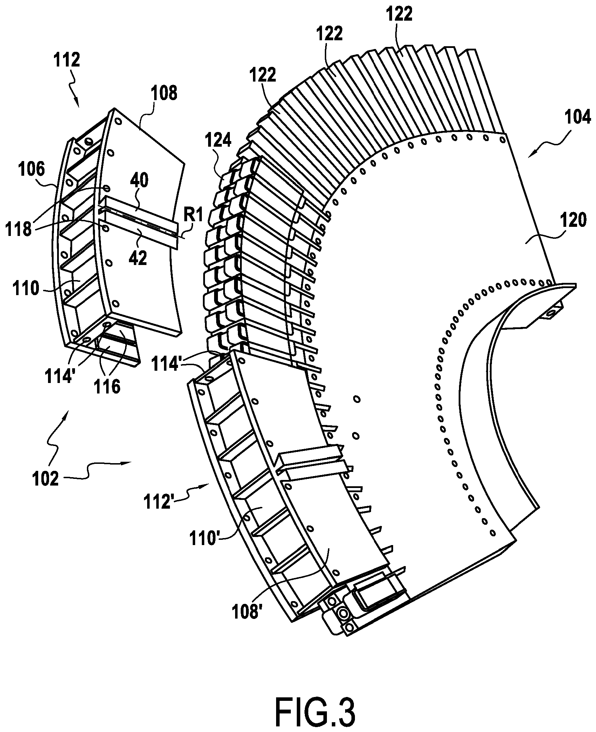

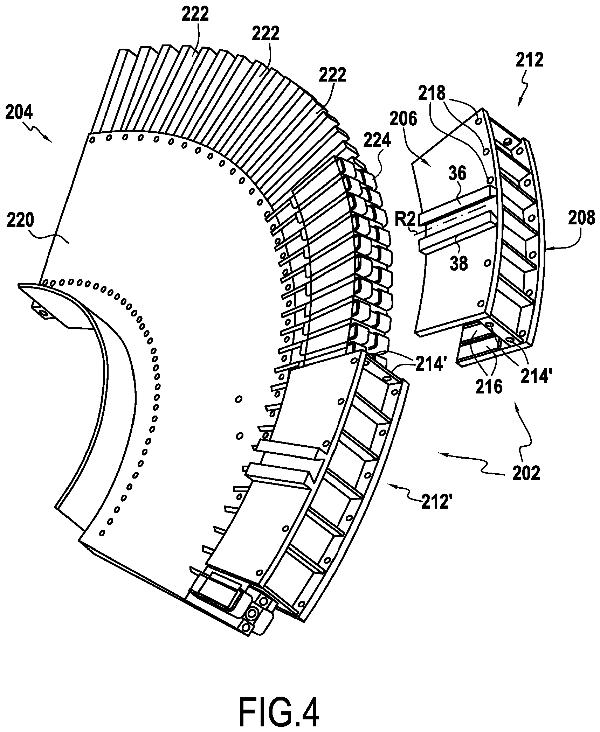

Les figures **3** et **4** représentent une partie des première **100** et deuxième **200** machines électriques du générateur électrique **10** selon la présente invention.

Tel que représenté sur la figure **3****,** le premier rotor **102** est constitué de plusieurs secteurs **112, 112'** qui comportent des orifices d'assemblage **114, 114'** formés sur les bordures supérieures **110, 110'** de manière à assembler les secteurs **112, 112',** par l'intermédiaire de moyens d'assemblage tels que, par exemple et de manière non limitative, des vis passées au travers des orifices d'assemblage **114, 114'.** On pourrait également concevoir, et sans sortir du cadre de la présente invention, tout autre moyen d'assemblage.

Les première et seconde parois **106, 108** du premier rotor **102** définissent chacune une face interne et une face externe, les faces internes des première et seconde parois **106, 108** étant disposées en regard l'une de l'autre et entourant le premier stator **104.** Tel que représenté sur la figure **3****,** des zones d'aimantation **116** sont disposées sur les faces internes des parois **106, 108,** ces zones d'aimantation **116** constituant la partie inductrice du circuit magnétique de la première machine électrique **100.**

Par exemple, et de manière non limitative, les zones d'aimantation **116** sont constituées par la superposition d'aimants permanents. On pourrait également concevoir, et sans sortir du cadre de la présente invention, une partie inductrice du circuit magnétique de la première machine électrique **100** constituée de tout autre élément, tel que par exemple des bobines.

Tel que représenté sur la figure **3****,** les premier **40** et second **42** côtés de la glissière intérieure **34** sont formés sur la face externe de la seconde paroi **108.** Par ailleurs, des premiers moyens d'appariement **118** sont disposés sur la face externe de la seconde paroi **108.**

Le premier stator **104** est constitué d'une première jante, dont une portion **120** est représentée sur la figure **3** ; la portion **120** comporte des premières encoches radiales **122** dans lesquelles sont insérées des premiers modules actifs **124.**

Les premiers modules actifs **124** constituent la partie induite du circuit magnétique de la première machine électrique **100.**

On comprend donc, à l'observation de la figure **3****,** que la première jante du premier stator **104** est constituée avantageusement d'au moins deux portions **120,** les portions **120** pouvant aisément être assemblées sur le site de montage du générateur électrique **10** par des opérations classiques, pour l'homme du métier, telles que par exemple la soudure ou le rivetage.

On comprend également que la forme des secteurs **112, 112'** du premier rotor **102** permet de placer aisément et précisément la partie inductrice par rapport à la partie induite du premier stator **104.**

On comprend enfin que l'assemblage des portions **120** de la première jante du premier stator **104** définit un disque dont le centre présente un orifice, permettant de monter le premier stator **104** libre en rotation. L'assemblage des secteurs **112, 112'** du premier rotor **102** définit, pour sa part, une portion de cylindre dont le diamètre extérieur est égal, voire légèrement supérieur à celui du disque formé par le premier stator **104,** la portion de cylindre formée par le premier rotor **102** comportant deux bordures latérales disposées perpendiculairement par rapport à la surface cylindrique et configurées pour être disposées de part et d'autre de l'extrémité radiale du disque formé par le premier stator **104.**

De manière similaire, et tel que représenté sur la figure **4****,** le deuxième rotor **202** est constitué de plusieurs secteurs **212, 212'** comportant des orifices d'assemblage **214, 214'.** Les première et seconde parois **206, 208** comportent chacune une face interne et une face externe, des zones d'aimantation **216** étant disposées sur les faces internes des parois **206, 208.**

Tel que représenté sur la figure **4****,** les première **36** et seconde **38** portions latérales de la glissière extérieure **32** sont formées sur la face externe de la première paroi **206.** Par ailleurs, des deuxièmes moyens d'appariement **218** sont disposés sur la face externe de la première paroi **206.**

Le deuxième stator **204** est constitué d'une deuxième jante, dont une portion **220** est représentée sur la figure **4** ; la portion **220** comporte des deuxièmes encoches radiales **222** dans lesquelles sont insérées des deuxièmes modules actifs **224.**

On comprend à l'observation des figures **3** et **4** que les côtés **40, 42** et les portions latérales **36, 38** sont respectivement disposés de manière symétrique par rapport à un premier **R1** et à un second **R2** rayons des premier **102** et deuxième **202** rotors.

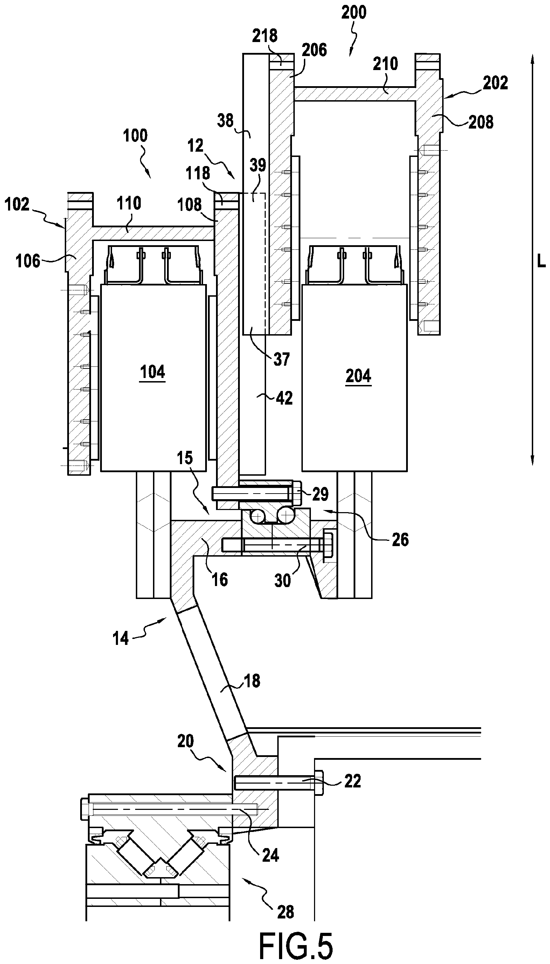

La figure **5** représente une étape du montage du générateur électrique **10.**

Dans un premier temps, les premiers moyens de liaison **14** sont montés sur le deuxième roulement **28,** par coopération des seconds éléments de fixation **24** avec la partie supérieure du deuxième roulement **28.**

Les portions **120** de la première jante du premier stator **104** sont ensuite montées sur l'extrémité supérieure **15** des premiers moyens de liaison **14** et le premier roulement **26** est également monté, par exemple et de manière non limitative par soudure ou par rivetage, sur l'extrémité supérieure **15** des premiers moyens de liaison **14.**

Tel que détaillé préalablement à l'observation de la figure **3****,** les secteurs **112, 112'** du premier rotor **102** sont ensuite montés autour du premier stator **104,** les secteurs **112, 112'** étant solidarisés au moyen de leurs orifices d'assemblage **114, 114'** et de moyens d'assemblage, et l'engagement radial des secteurs **112, 112'** autour du premier stator **104** étant limité par la présence du premier roulement **26** ; en particulier, les premiers moyens de solidarisation **29** permettent de solidariser ensemble la deuxième paroi **108** du premier rotor **102** et le premier roulement **26.**

Par suite, les portions **220** de la seconde jante du deuxième stator **204** sont montées sur les moyens d'attachement **16** de l'extrémité supérieure **15** des moyens de liaison **14.** En particulier, les moyens d'attachement **16** définissent une première et une seconde extrémités longitudinales, les premier et deuxième stators **104, 204** étant montés respectivement sur chacune des extrémités longitudinales, le premier roulement **26** étant, pour sa part, monté entre les deux extrémités longitudinales.

Ensuite, et tel que représenté sur la figure **5****,** les secteurs **212, 212'** du deuxième rotor **202** sont déplacés radialement par rapport aux secteurs **112, 112**' du premier rotor **102.**

Par exemple et de manière non limitative, les premier et deuxième rotors **102, 202** comportent chacun le même nombre de secteurs, chaque secteur **112, 112', 212, 212'** comportant des premiers moyens de solidarisation azimutale **12** et chaque secteur **112, 112'** du premier rotor **102** étant configuré pour coopérer avec un secteur **212, 212'** du deuxième rotor **202.**

On pourrait également concevoir, et sans sortir du cadre de la présente invention, des premier **102** et deuxième **202** rotors ne comportant pas le même nombre de secteurs ou dont l'appariement des secteurs des premier et deuxième rotors **102, 202** ne serait réalisé que par certains de leurs secteurs.

On comprend donc que, tel que représenté en particulier sur la figure **5****,** le secteur **220** du deuxième rotor **202** est disposé au-dessus du deuxième stator **204,** les première et deuxième parois **206, 208** étant disposées de chaque côté du deuxième stator **204,** et la première paroi **206** du deuxième rotor **202** est disposée en regard de la seconde paroi **108** du premier rotor **102,** l'extrémité inférieure **37** de la glissière extérieure **32** formée sur le deuxième rotor **202** étant disposée en regard, voire légèrement au-dessus, de l'extrémité supérieure **39** de la glissière intérieure **34** formée sur le premier rotor **102.** Le deuxième rotor **202** peut alors être déplacé radialement par rapport au premier rotor **102,** lors du montage ou du démontage du générateur électrique **10,** de sorte que la glissière extérieure **32** coulisse autour de la glissière intérieure **34.** Dans cette position où les glissières extérieure **32** et intérieure **34** coopèrent, les premiers **R1** et deuxième **R2** rayons sont confondus.

Le deuxième rotor **202** est ainsi déplacé radialement par rapport au premier rotor **102** jusqu'à ce que les premiers **118** et deuxièmes **218** moyens d'appariement soient disposés en regard les uns des autres pour apparier les premier **102** et deuxième **202** rotors. Par exemple, et de manière non limitative, les moyens d'appariement **118, 218** peuvent être constitués de trous filetés et de boulons, de rivets, ou de tout autre dispositif permettant d'apparier les premier et deuxième **102, 202** rotors. On pourrait également concevoir, et sans sortir du cadre de la présente invention, la présence d'une butée sur les premiers moyens de solidarisation azimutale **12** permettant de limiter le déplacement radial de la deuxième paroi **108** du premier rotor **102** par rapport à la première paroi **206** du deuxième rotor **202.**

On comprend donc que les premiers moyens de solidarisation azimutale **12** ont pour effet que les premier **102** et deuxième **202** rotors ne peuvent tourner l'un par rapport à l'autre autour du premier axe **X.**

On comprend également que la forme des premiers moyens de solidarisation azimutale **12,** décrite en particulier en référence à la figure **2****,** est telle que les premiers moyens de solidarisation azimutale **12** empêchent tout déplacement axial par rapport au premier axe **X** entre les premier **102** et deuxième **202** rotors, permettant ainsi de maintenir constant la distance séparant les premier **102** et deuxième **202** rotors. Il apparaît donc que les premiers moyens de solidarisation azimutale **12** constituent également des moyens de solidarisation axiale.

Sans sortir du cadre la présente invention, on peut également concevoir un générateur électrique **10** dont le deuxième rotor **202** est solidarisé sur le premier roulement **26,** le deuxième rotor **202** ne comportant ainsi pas nécessairement de moyens d'appariement pour permettre au deuxième rotor **202** d'être apparié directement avec le premier rotor **102.**

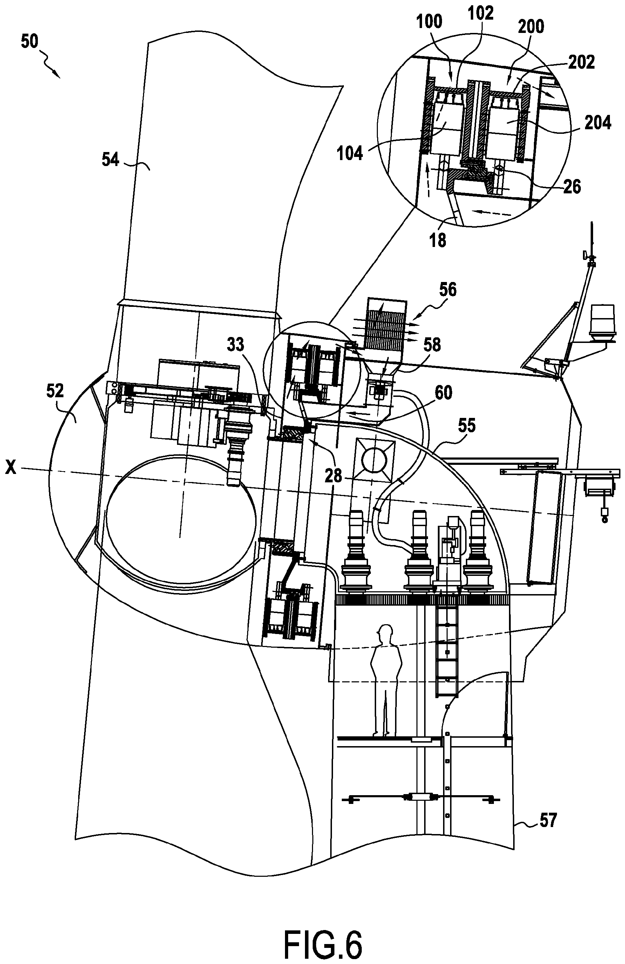

La figure **6** représente une éolienne **50** comportant un moyeu **52** monté rotatif autour du premier axe **X** et une hélice **54** permettant d'entraîner en rotation le moyeu **52** autour du premier axe **X** ; en outre, les première **100** et deuxième **200** machines électriques sont montées dans l'éolienne **50.** Tel que représenté sur la figure **6****,** les premier et deuxième stators **104, 204** ainsi que les premier et deuxième **102, 202** rotors sont coaxiaux les uns aux autres, les premier et deuxième **102, 202** rotors étant tous deux montés rotatifs autour du premier axe **X.**

Les moyens de fixation **33** montés sur la première paroi **106** du premier rotor **102** sont également montés sur le moyeu **52.** On comprend donc que lorsque l'hélice **54** entraîne en rotation le moyeu **52** autour du premier axe **X,** elle entraîne également en rotation le premier rotor **102** autour du premier axe **X,** par l'intermédiaire des moyens de fixation **33.** Par suite, les premier et deuxième rotors **102, 202** étant solidarisés par les premiers moyens de solidarisation azimutale **12,** le deuxième rotor **202** est simultanément entraîné en rotation autour du premier axe **X.**

Par exemple et de manière non limitative, les moyens de fixation **33** sont constitués d'une plaque ou d'une tôle, dont l'extrémité inférieure est fixée au moyeu **52** et au second roulement **28,** par exemple par pinçage de l'extrémité inférieure de la tôle entre le moyeu **52** et le second roulement **28.**

Tel que cela apparaît à l'observation de la figure **6****,** l'éolienne **50** est également constituée d'un châssis **55** solidarisé à un mât **57** sur lequel le moyeu **52** est monté rotatif. Les premiers et deuxième **104, 204** stators étant montés d'une part sur le châssis **55** de l'éolienne par l'intermédiaire des premiers éléments de fixation **22** montés sur l'extrémité inférieure **20** des premiers moyens de liaison **14,** et d'autre part sur les premier et deuxième **26, 28** roulements, ils ne sont pas entraînés en rotation autour de l'axe **X.** Ainsi, par la coopération respective de la partie induite des premier et deuxième **104, 204** stators avec la partie inductive des premier et deuxième rotors **102, 202,** les première et deuxième **100, 200** machines électriques génèrent respectivement un premier et un second flux magnétiques.

Tel que représenté sur la figure **6****,** l'éolienne **50** comporte également un système de ventilation **56** qui comprend au moins un module de ventilation **58** constitué d'un ventilateur et d'un moteur. Le système de ventilation **56** comporte en outre un conduit d'aération **60** dirigé vers la perforation **18** formée dans la portion médiane des premiers moyens de liaison **14.**

Ainsi, et tel que représenté par le cycle fléché de la figure **6****,** le système de ventilation **56** permet de diffuser un fluide, tel que par exemple de l'air, d'une température **T1** dans les première et deuxième **100, 200** machines électriques. Le fonctionnement des première et deuxième **100, 200** machines électriques, en particulier la rotation des premier **102** et deuxième **202** rotors, tend à élever la température du fluide qui est ensuite dirigé, à une température **T2,** vers le système de ventilation **56.** Par échange thermique avec l'extérieur de l'éolienne **50,** la température du fluide est abaissée à la température **T1**, avant que le fluide ne soit de nouveau dirigé dans le conduit d'aération **60** vers les première et deuxième **100, 200** machines électriques.

Tel que détaillé en particulier en référence aux figures **3** et **4****,** les première **100** et deuxième **200** machines électriques présentent une structure modulaire et comportent en particulier plusieurs secteurs **112, 112', 212, 212'** constituant les premier **102** et deuxième **202** rotors, et plusieurs portions **120, 220** constituant les jantes des premier **104** et deuxième **204** stators. Par suite, les premiers moyens de liaison **14** définissent une forme circulaire coaxial avec les stators **104, 204** et peuvent également, et de manière non limitative, être constitués d'une pluralité d'éléments disposés entre les première **100** et deuxième **200** machines électriques. On comprend également que les perforations **18** formées dans la partie médiane des premiers moyens de liaison **14** ne sont pas nécessairement réparties de manière homogène sur l'ensemble de la forme circulaire définie par les premiers moyens de liaison **14.** Par exemple, et de manière non limitative, en certaines positions de la forme circulaire définie par les premiers moyens de liaison **14,** la portion médiane peut ne pas être perforée. Ainsi, le système de ventilation **56** permet la ventilation des première **100** et deuxième **200** machines électriques, les perforations **18** formées dans les premiers moyens de liaison **14** dirigeant le fluide vers la première machine **100,** alors que les positions de la forme circulaire définie par les premiers moyens de liaison **14** dans lesquelles aucune perforation n'est formée dirigent le fluide vers la deuxième machine électrique **200.**

Par ailleurs, le système de ventilation **56** peut être constitué de plusieurs modules de ventilation **58.** Par exemple et de manière non limitative, afin de permettre une ventilation homogène des machines électriques **100, 200,** le même nombre de modules de ventilation **58** peut être destiné aux ventilations des première **100** et deuxième **200** machines électriques.

On comprend donc que les premiers moyens de liaison **14** lient indirectement le moyeu **52** aux première et deuxième **100, 200** machines électriques, et constitue un flasque dans lequel des perforations **18** sont agencées pour permettre la ventilation des machines électriques **100, 200.**

Tel que détaillé précédemment, les premier et deuxième rotors **102, 202** et les premier et deuxième stators **104, 204** sont constitués respectivement d'aimants permanents disposés autour de modules actifs. On comprend également que la structure des première et deuxième **100, 200** machines électriques selon la présente invention est identique. Néanmoins, on pourrait tout aussi bien concevoir, et sans sortir du cadre de la présente invention, un générateur électrique **10** dont l'une des première et deuxième machines électriques **100, 200,** ou les deux, présenteraient une structure des parties induite et inductrice différentes ; par exemple, et de manière non limitative, l'une des machines électriques **100**, **200** pourrait comprendre un rotor bobiné.

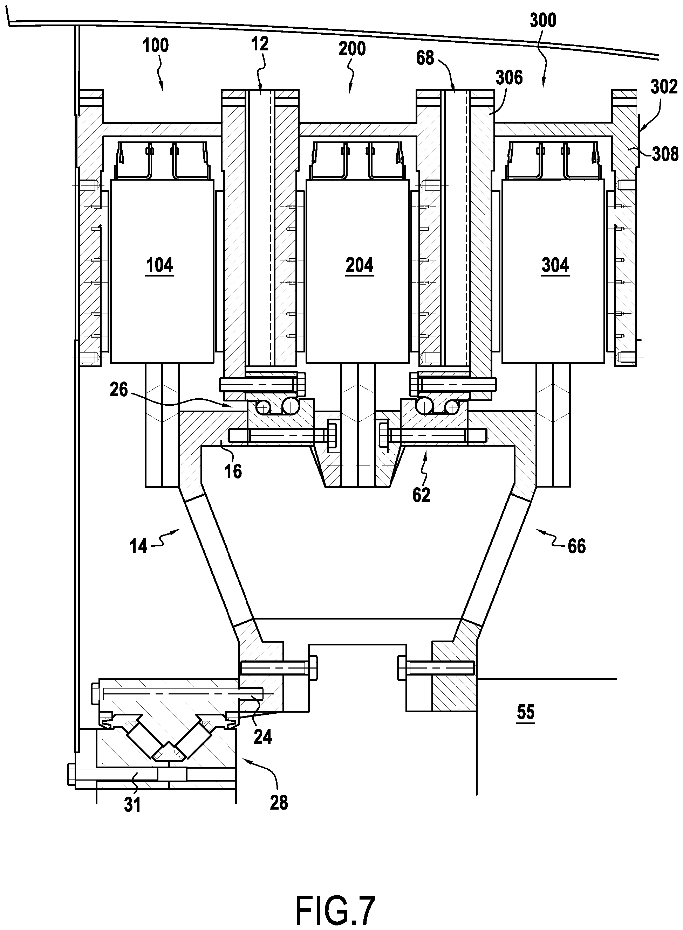

La figure **7** représente un autre mode de réalisation du générateur électrique **10** selon la présente invention, qui comporte en plus des première et deuxième **100, 200** machines électriques, une troisième machine électrique **300** constituée d'un troisième rotor **302** coaxial au premier rotor **102** et entourant un troisième rotor **304.** En outre, le générateur électrique **10** comporte également un troisième **62** roulement et des deuxièmes moyens de liaison **66.**

De manière similaire aux première **100** et deuxième **200** machines électriques décrites précédemment, le troisième rotor **302** de la troisième machine électrique **300** comporte une première **306** et une deuxième **308** parois, toutes deux de forme annulaire, qui définissent un troisième logement annulaire configuré pour recevoir le troisième stator **304.** Ainsi, le troisième stator **304** est enveloppé par le troisième rotor **302** de manière circonférentielle.

Tel que représenté sur la figure **7****,** les première **100** et troisième **300** machines électriques sont disposées symétriquement de part et d'autre de la deuxième machine électrique **200.**

On comprend que pour monter le générateur électrique **10** tel que représenté sur la figure **7****,** on monte, de manière similaire au montage précédemment décrit, la première machine électrique **100** et le deuxième stator **204** sur les premiers moyens de liaison **14.** On monte ensuite les deuxièmes moyens de liaison **66** sur le deuxième stator **204,** l'extrémité inférieure des deuxièmes moyens de liaison **66** étant fixée au châssis **55.** La troisième machine électrique **300** est ensuite montée sur les seconds moyens de liaison **66,** la première paroi **306** du troisième rotor **302** étant montée sur le troisième roulement **62,** alors que le troisième stator **304** est monté sur l'extrémité supérieure des deuxièmes moyens de liaison **66.**

Le deuxième rotor **202** est ensuite engagé entre les première **100** et troisième **300** machines électriques, des deuxièmes moyens de solidarisation azimutale **68** étant formés sur la deuxième paroi **208** de la deuxième machine électrique **200** et sur la première paroi **306** de la troisième machine électrique **300.**

On comprend donc que les deuxièmes moyens de solidarisation azimutale **68** sont configurés pour relier ensemble les deuxième et troisième logements annulaires définis respectivement par les deuxième **202** et troisième **302** rotors.

Ainsi, et manière similaire à la description précédente en particulier en référence à la figure **6****,** l'hélice **54** entraîne le moyeu **52** en rotation autour du premier axe **X,** de telle sorte que le premier **102** rotor est entraîné en rotation autour du premier axe **X** par l'intermédiaire des moyens de fixation **33.** Par suite, les deuxième **202** et troisième **302** rotors étant solidarisés au premier rotor **102** par les premiers **12** et deuxièmes **68** moyens de solidarisation azimutale, ils sont entraînés simultanément en rotation autour du premier axe **X.** Les premier **104,** deuxième **204** et troisième **304** stators n'étant, pour leur part, pas entraînés en rotation autour du premier axe **X,** par la coopération respective de la partie induite des premier, deuxième et troisième **104, 204, 304** stators avec la partie inductive des premier, deuxième et troisième rotors **102, 202, 302,** les première, deuxième et troisième **100**, **200, 300** machines électriques génèrent respectivement un premier, un deuxième et un troisième flux magnétiques.

Les caractéristiques détaillées précédemment, quant à la structure des première et deuxième **100, 200** machines électriques restent bien évidemment applicables pour la troisième machine électrique **300.** En particulier, des perforations peuvent être agencées dans les deuxièmes moyens de liaison **66** pour permettre au système de ventilation **56** de ventiler les première, deuxième et troisième **100, 200, 300** machines électriques.

L'invention, bien que particulièrement détaillée pour des générateurs électriques comportant deux ou trois machines électriques, peut de manière directe et évidente être étendue à un nombre supérieur de machines électriques.

## Revendications

1. Générateur électrique (10) permettant la conversion d'une énergie mécanique en énergie électrique, comportant au moins :
- une première machine électrique (100) à flux axial, comportant un premier rotor (102) monté rotatif autour d'un premier axe (X) et un premier stator (104) pour générer un premier flux magnétique ;
- une deuxième machine électrique (200) à flux axial, comportant un deuxième rotor (202) distinct du premier rotor (102), qui est coaxial au premier rotor et un deuxième stator (204) pour générer un deuxième flux magnétique ;
- des premiers moyens de solidarisation pour solidariser les premier et deuxième rotors de sorte que les premier et deuxième rotors peuvent être simultanément mis en rotation autour du premier axe pour générer simultanément les premier et deuxième flux magnétiques
**caractérisé en ce que** :
- le premier rotor (102) entoure le premier stator (104),
- le deuxième rotor (200) entoure le deuxième stator (204),
et **en ce que** le premier et le deuxième rotors comportent chacun une première (106, 206) et une deuxième (108, 208) parois, disposées de part et d'autre respectivement des premier et deuxième stators, de manière à définir respectivement un premier et un deuxième logements annulaires configurés pour recevoir respectivement les premier (104) et deuxième (204) stators, la deuxième paroi (108) du premier rotor (102) et la première paroi (206) du deuxième rotor (202) étant disposées en regard l'une de l'autre, et les premiers moyens de solidarisation comportant une liaison glissière (32, 34) configurée pour permettre un déplacement radial de la deuxième paroi du premier rotor par rapport à la première paroi du deuxième rotor lors de l'assemblage du générateur électrique, et les premiers moyens de solidarisation étant configurés pour coupler solidairement la deuxième paroi du premier rotor et la première paroi du deuxième rotor selon une direction perpendiculaire à la fois à la direction axiale des premier et deuxième rotors, et à la direction dudit déplacement radial de la liaison glissière.

2. Générateur électrique selon la revendication **1, caractérisé en ce que** les premiers moyens de solidarisation constituent également des moyens de solidarisation axiale pour coupler solidairement selon le premier axe les premier et deuxième rotors.

3. Générateur électrique selon la revendication **1 ou 2, caractérisé en ce que** la liaison glissière comprend une glissière extérieure (32) formée sur l'une des parois prises parmi la deuxième paroi du premier rotor et la première paroi du deuxième rotor, et une glissière intérieure (34) formée sur l'autre des parois prises parmi la deuxième paroi du premier rotor et la première paroi du deuxième rotor, les glissières intérieure et extérieure étant configurées pour que la glissière intérieure coulisse dans la glissière extérieure lors de l'assemblage du générateur électrique.

4. Générateur électrique selon la revendication **3, caractérisé en ce que** la liaison glissière présente un profil en forme de queue d'aronde.

5. Générateur électrique selon l'une quelconque des revendications **1 à 4, caractérisé en ce que** l'un des premier et deuxième rotors est composé d'au moins deux secteurs (112, 112', 212, 212') et de moyens d'assemblage (114, 114', 214, 214') permettant de fixer les deux secteurs l'un à l'autre, les premiers moyens de solidarisation étant agencés sur au moins l'un des secteurs.

6. Générateur électrique selon l'une quelconque des revendications **1 à 5, caractérisé en ce qu'**il comporte en outre des moyens d'attachement (16) pour solidariser les premier et deuxième stators.

7. Eolienne (50) comportant un mât (57) et un moyeu (52) monté rotatif par rapport au mât autour d'un axe de rotation (X), le moyeu étant entraîné en rotation par une hélice (54), ladite éolienne étant **caractérisée en ce qu'**elle comporte également un générateur électrique (10) selon l'une quelconque des revendications **1 à 6,** les premier et deuxième rotors (102, 202) étant montés rotatifs autour de l'axe de rotation.

8. Eolienne selon la revendication **7, caractérisée en ce qu'**au moins l'un des premier et deuxième rotors comporte des moyens de fixation (33) configurés pour fixer ledit au moins un des premier et deuxième rotors au moyeu.

9. Eolienne selon la revendication **7** ou **8, caractérisée en ce qu'**elle comporte un flasque liant le moyeu à au moins l'une des machines électriques, des perforations (18) étant agencées dans le flasque pour permettre la ventilation des machines électriques.

## Patentansprüche

1. Elektrischer Generator (10), der die Umwandlung einer mechanischen Energie in elektrische Energie ermöglicht und mindestens umfasst:
- eine erste elektrische Axialflussmaschine (100), die einen ersten Rotor (102), der um eine erste Achse (X) drehbar gelagert ist, und einen ersten Stator (104) zum Erzeugen eines ersten Magnetflusses umfasst,
- eine zweite elektrische Axialflussmaschine (200), die einen zweiten Rotor (202), der sich von dem ersten Rotor (102) unterscheidet und der koaxial zu dem ersten Rotor ist, und einen zweiten Stator (204) zum Erzeugen eines zweiten Magnetflusses umfasst,
- erste feste Verbindungsmittel zum festen Verbinden des ersten und des zweiten Rotors, derart dass der erste und der zweite Rotor gleichzeitig um die erste Achse in Drehung versetzt werden können, um gleichzeitig den ersten und den zweiten Magnetfluss zu erzeugen,
**dadurch gekennzeichnet, dass**:
- der erste Rotor (102) den ersten Stator (104) umgibt,
- der zweite Rotor (200) den zweiten Stator (204) umgibt,
und dadurch, dass der erste und der zweite Rotor jeweils eine erste (106, 206) und eine zweite (108, 208) Wand umfassen, die derart auf beiden Seiten des ersten beziehungsweise des zweiten Stators angeordnet sind, dass eine erste beziehungsweise eine zweite ringförmige Aufnahme definiert werden, die dazu ausgestaltet sind, den ersten (104) beziehungsweise den zweiten Stator (204) aufzunehmen, wobei die zweite Wand (108) des ersten Rotors (102) und die erste Wand (206) des zweiten Rotors (202) einander gegenüberliegend angeordnet sind und die ersten festen Verbindungsmittel eine Gleitverbindung (32, 34) umfassen, die dazu ausgestaltet ist, beim Zusammenbau des elektrischen Generators eine radiale Verlagerung der zweiten Wand des ersten Rotors in Bezug auf die erste Wand des zweiten Rotors zu erlauben, und die ersten festen Verbindungsmittel dazu ausgestaltet sind, die zweite Wand des ersten Rotors und die erste Wand des zweiten Rotors entlang einer Richtung fest verbunden zu koppeln, die sowohl zu der axialen Richtung des ersten und des zweiten Rotors als auch zu der Richtung der radialen Verlagerung der Gleitverbindung senkrecht ist.

2. Elektrischer Generator nach Anspruch 1, **dadurch gekennzeichnet, dass** die ersten festen Verbindungsmittel auch axiale feste Verbindungsmittel bilden, um den ersten und den zweiten Rotor fest verbunden entlang der ersten Achse zu koppeln.

3. Elektrischer Generator nach Anspruch 1 oder 2, **dadurch gekennzeichnet, dass** die Gleitverbindung eine äußere Gleitführung (32), die auf einer der Wände von der zweiten Wand des ersten Rotors und der ersten Wand des zweiten Rotors gebildet ist, und eine innere Gleitführung (34) umfasst, die auf der anderen der Wände von der zweiten Wand des ersten Rotors und der ersten Wand des zweiten Rotors gebildet ist, wobei die innere und die äußere Gleitführung so ausgestaltet sind, dass die innere Gleitführung beim Zusammenbau des elektrischen Generators auf der äußeren Gleitführung gleitet.

4. Elektrischer Generator nach Anspruch 3, **dadurch gekennzeichnet, dass** die Gleitführung ein schwalbenschwanzförmiges Profil aufweist.

5. Elektrischer Generator nach einem der Ansprüche 1 bis 4, **dadurch gekennzeichnet, dass** einer von dem ersten und dem zweiten Rotor aus mindestens zwei Sektoren (112, 112', 212, 212') und Zusammenbaumitteln (114, 114', 214, 214') besteht, die das Befestigen der zwei Sektoren aneinander ermöglichen, wobei die ersten festen Verbindungsmittel auf mindestens einem der Sektoren eingerichtet sind.

6. Elektrischer Generator nach einem der Ansprüche 1 bis 5, **dadurch gekennzeichnet, dass** er ferner Anbringungsmittel (16) zum festen Verbinden des ersten und des zweiten Stators umfasst.

7. Windrad (50), das einen Mast (57) und eine Nabe (52) umfasst, die in Bezug auf den Mast um eine Drehachse (X) drehbar gelagert ist, wobei die Nabe von einem Rotorblatt (54) drehbar angetrieben wird, wobei das Windrad **dadurch gekennzeichnet ist, dass** es auch einen elektrischen Generator (10) nach einem der Ansprüche 1 bis 6 umfasst, wobei der erste und der zweite Rotor (102, 202) um die Drehachse drehbar gelagert sind.

8. Windrad nach Anspruch 7, **dadurch gekennzeichnet, dass** mindestens einer von dem ersten und dem zweiten Rotor Befestigungsmittel (33) umfasst, die dazu ausgestaltet sind, den mindestens einen von dem ersten und dem zweiten Rotor an der Nabe zu befestigen.

9. Windrad nach Anspruch 7 oder 8, **dadurch gekennzeichnet, dass** es einen Flansch umfasst, der die Nabe mit mindestens einer der elektrischen Maschinen verbindet, wobei Durchbohrungen (18) in dem Flansch eingerichtet sind, um die Belüftung der elektrischen Maschinen zu ermöglichen.

## Claims

1. Electric generator (10) allowing the conversion of mechanical energy to electrical energy, comprising at least:
- a first axial flow electrical machine (100) comprising a first rotor (102) mounted in rotation about a first axis (X) and a first stator (104) to generate a first magnetic flow;
- a second axial flow electrical machine (200) comprising a second rotor (202) separate from the first rotor (102), which is coaxial to the first rotor and a second stator (204) to generate a second magnetic flow;
- first securing means to secure the first and second rotors so that the first and second rotors can be simultaneously set in rotation about the first axis to generate the first and second magnetic flows simultaneously **characterized in that**:
- the first rotor (102) surrounds the first stator (104);
- the second rotor (202) surrounds the second stator (204),
and **in that** the first and second rotors each comprise first (106, 206) and second (108, 208) walls arranged on either sides of the first and second stators respectively, so as to respectively define a first and a second annular housings configured to receive the first (104) and second (204) stators respectively, the second wall (108) of the first rotor (102) and the first wall (206) of the second rotor (202) being arranged facing one another, and the first securing means comprising a slide connection (32, 34) configured to allow radial movement of the second wall of the first rotor relative to the first wall of the second rotor when assembling the electric generator, and the first securing means being configured to join together the second wall of the first rotor and the first wall of the second rotor in a direction perpendicular both to the axial direction of the first and second rotors, and to the direction of said radial movement of the sliding connection.

2. The electric generator according to claim 1, **characterized in that** the first securing means also form axial securing means to secure together the first and second rotors along the first axis.

3. The electric generator according to claim 1 or 2, **characterized in that** the slide connection comprises an outer slide (32) formed on one of the walls from among the second wall of the first rotor and the first wall of the second rotor, and an inner slide (34) formed on the other of the walls from among the second wall of the first rotor and the first wall of the second rotor, the inner and outer slides being configured so that the inner slide slides in the outer slide when assembling the electric generator.

4. The electric generator according to claim 3, **characterized in that** the slide connection has a dovetail-shaped profile.

5. The electric generator according to any one of claims 1 to 4, **characterized in that** one of the first and second rotors is composed of at least two sections (112, 112', 212, 212') and of assembly means (114, 114', 214, 214') allowing the assembling together of the two sections, the first securing means being arranged on at least one of the sections.

6. The electric generator according to any one of claims 1 to 5, **characterized in that** it further comprises attaching means (16) to secure the first and second stators.

7. A wind turbine (50) comprising a tower (57) and a hub (52) mounted in rotation relative to the tower about an axis of rotation (X), the hub being driven in rotation by a spinner (54), said wind turbine being **characterized in that** it also comprises an electric generator (10) according to any one of claims 1 to 6, the first and second rotors (102, 202) being mounted in rotation about the axis of rotation.

8. The wind turbine according to claim 7, **characterized in that** at least one of the first and second rotors comprises attaching means (33) configured to attach the said at least one of the first and second rotors to the hub.

9. The wind turbine according to claim 7 or 8, **characterized in that** it comprises a flange connecting the hub to at least one of the electrical machines, perforations (18) being made in the flange to allow the ventilation of the electrical machines.
